# FASCICULE DE BREVET EUROPEEN

(11) **EP 1 805 857 B1**
(45) Date de publication et mention de la délivrance du brevet: **19.01.2011**
(21) Numéro de dépôt: 05802512.3
(22) Date de dépôt: 14.09.2005
(51) Int. Cl.: H02G 1/00, H01R 43/28, B26D 7/01, B26B 29/06

(54) **OUTIL POUR AIDER A COUPER A UNE LONGUEUR PRECISE LES CONDUCTEURS D'UN CABLE ELECTRIQUE**
INSTRUMENT ZUR UNTERSTÜTZUNG BEIM ZUSCHNEIDEN VON LEITERN EINES ELEKTRISCHEN KABELS AUF EINE EXAKTE LÄNGE
TOOL FOR ASSISTING IN CUTTING THE CONDUCTORS OF AN ELECTRICAL CABLE TO A PRECISE LENGTH

(30) Priorité: 27.09.2004 FR 0410179
(43) Date de publication de la demande: 11.07.2007
(73) Titulaire: AIRBUS OPERATIONS (SAS), 31060 Toulouse (FR)
(72) Inventeur: GAMBARDELLA, Eddie, F-31700 Blagnac (FR); FERAL, Daniel, F-31330 Merville (FR); ANDRE, Gilles, F-31470 Fonsorbes (FR)
(74) Mandataire: Bonnetat, Christian
(86) Numéro de dépôt international: PCT/FR2005/002273
(87) Numéro de publication internationale: WO 2006/035130

(56) Documents cités:
- FR-A- 2 432 233
- US-A- 1 374 278
- US-A- 1 491 022
- US-A- 4 731 928
- US-A- 4 914 986
- US-A1- 2004 185 704
- PATENT ABSTRACTS OF JAPAN vol. 1998, no. 11, 30 septembre 1998 (1998-09-30) & JP 10 172708 A (MATSUSHITA ELECTRIC IND CO LTD), 26 juin 1998 (1998-06-26)
- PATENT ABSTRACTS OF JAPAN vol. 2002, no. 09, 4 septembre 2002 (2002-09-04) & JP 2002 151195 A (TRI SAITAMA:KK), 24 mai 2002 (2002-05-24)

## Description

La présente invention concerne un outil destiné à aider un opérateur ou une machine à couper à une longueur précise les conducteurs d'un câble électrique comportant une pluralité de tels conducteurs. Un tel outil est connu du document FR-A-2 432 233.

On sait que certaines techniques électriques, comme par exemple les techniques informatiques, exigent que la longueur des conducteurs électriques faisant saillie hors de la gaine isolante extérieure d'un câble soit très précise et, en tout cas, soit plus précise que celle que l'on peut obtenir en utilisant un réglet.

L'objet de la présente invention est un outil permettant d'atteindre une grande précision dans la longueur de saillie de ces conducteurs.

A cette fin, selon l'invention, l'outil destiné à aider à couper à longueur des conducteurs d'un câble électrique comportant une pluralité de tels conducteurs enveloppés dans une gaine isolante, au moins une extrémité dudit câble étant préparée de façon que les portions d'extrémité desdits conducteurs font saillie par rapport à l'extrémité correspondante de ladite gaine isolante, ledit outil permettant d'ajuster, à une longueur précise prédéterminée, lesdites portions d'extrémité saillantes desdits conducteurs, est remarquable en ce que :
- il comporte un corps présentant une face de référence et un canal orthogonal à ladite face de référence ;
- ledit canal comporte une première partie de plus grande section et une seconde section de plus petite section, séparées par un épaulement ;
- ladite première partie du canal est apte à recevoir à frottement doux ledit câble électrique de façon que ladite extrémité de la gaine isolante vienne en butée contre ledit épaulement ;
- ladite seconde partie du canal est apte à recevoir à frottement doux l'ensemble desdites portions d'extrémité saillantes desdits conducteurs et, du côté opposé audit épaulement, débouche dans ladite face de référence ;
- la distance séparant ledit épaulement de ladite face de référence est égale à ladite longueur précise prédéterminée.

Ainsi, en utilisant un outil de coupe apte à couper, le long de ladite face de référence, les extrémités desdits conducteurs faisant saillie par rapport à cette dernière, on donne auxdits conducteurs ladite longueur prédéterminée précise par rapport à l'extrémité de ladite gaine isolante.

De préférence, pour faciliter le passage desdites portions d'extrémité des conducteurs entre lesdites première et seconde parties du canal, on conforme ledit épaulement en entonnoir.

Dans le cas usuel d'un câble électrique dont l'extrémité de la gaine isolante est arrêtée par une bague (l'extrémité externe de celle-ci jouant alors le rôle d'extrémité de la gaine isolante), les portions d'extrémité desdits conducteurs faisant alors saillie par rapport à ladite bague, ladite première partie du canal est apte à recevoir à frottement doux ledit câble électrique équipé de ladite bague de façon que ladite bague vienne en butée contre ledit épaulement.

Dans le cas également usuel où le câble comporte une gaine métallique de blindage entre ladite gaine isolante et lesdits conducteurs, ladite première partie de canal est apte -que l'extrémité de la gaine soit arrêtée ou non par une bague- à recevoir à frottement doux ledit câble électrique avec ladite gaine métallique de blindage retroussée extérieurement sur ladite gaine isolante.

Les figures du dessin annexé feront bien comprendre comment l'invention peut être réalisée. Sur ces figures, des références identiques désignent des éléments semblables.
La figure 1 illustre, en vue schématique, l'extrémité d'un câble électrique préparée en vue de son introduction dans l'outil conforme à la présente invention.
La figure 2 est une vue, depuis la face de référence, de l'outil conforme à la présente invention.
La figure 3 est une coupe dudit outil, selon la ligne III-III de la figure 2.
La figure 4 illustre schématiquement la mise en oeuvre de l'outil des figures 2 et 3.

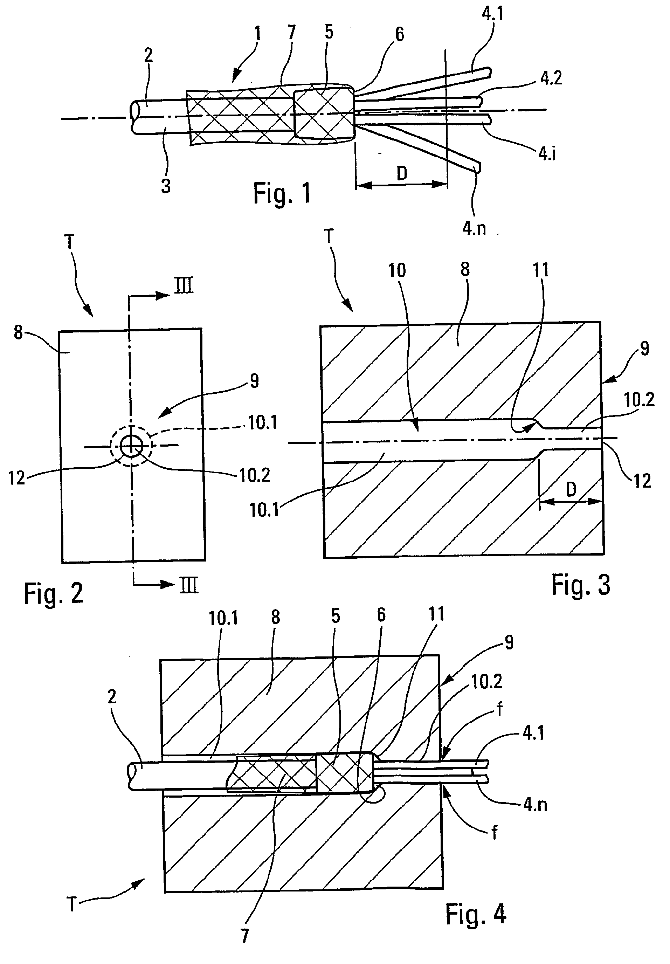

L'extrémité 1 du câble électrique 2, représentée sur la figure 1, comporte une gaine isolante externe 3 enfermant une pluralité de n conducteurs dont les portions d'extrémité 4.1, 4.2, ..., 4i, ..., 4.n (n et i étant des nombres entiers avec i < n) font saillie hors de ladite gaine 3 et sont, par exemple, revêtues de leurs propres gaines isolantes.

L'extrémité de la gaine isolante externe 3 est bloquée dans une bague 5 enserrant ledit câble 2 et, à partir de l'extrémité externe 6 de ladite bague 5, les portions d'extrémité saillantes des conducteurs 4.1 à 4.n ont une longueur supérieure à une valeur précise et prédéterminée D, désirée pour lesdites portions d'extrémité 4.1 à 4.n.

De plus, entre les conducteurs et la gaine isolante externe 3, le câble électrique 2 comporte une gaine métallique de blindage 7, sortant de la bague 5 par l'extrémité 6 de celle-ci et retroussée sur ladite bague 5 et sur ladite gaine externe 3.

Sur les figures 2 et 3, on a représenté l'outil d'aide à la coupe T, conforme à la présente invention.

L'outil T comporte un corps parallélépipédique 8 pourvu d'une face de référence 9. Dans le corps 8 est percé un canal 10, orthogonal à ladite face de référence 9. Le canal 10 comporte, du côté opposé à la face de référence 9, une première partie 10.1, de plus grand diamètre, et, du côté de la face de référence 9, une seconde partie 10.2 de plus petit diamètre, lesdites parties 10.1 et 10.2 étant reliées l'une à l'autre par un épaulement 11, conformé en entonnoir de la partie 10.1 vers la partie 10.2.

La partie 10.2 débouche dans la face de référence 9 par un orifice 12 et la distance séparant l'épaulement 11 de ladite face de référence 9 est égale à la distance désirée D.

La section de la partie 10.1 du canal 10 est apte à recevoir à frottement doux le câble 2, avec sa bague 5 et la gaine métallique de blindage 7 retroussée sur cette dernière et sur ledit câblé.

La section de la partie 10.2 du canal 10 est apte à recevoir à frottement doux l'ensemble des portions d'extrémité 4.1 à 4.n des conducteurs du câble 2.

Comme l'illustre la figure 4, le câble 2 est introduit dans la partie de canal 10.1, à travers l'extrémité de celui-ci opposée à l'épaulement 11, par les portions d'extrémité 4.1 à 4.n et par la bague 5 recouverte de la gaine de blindage 7. Le câble 2 est poussé vers la face de référence 9, pour que les portions d'extrémité 4.1 à 4.n passent de la partie de canal 10.1 à la partie de canal 10.2 à travers l'épaulement 11 et la poussée est poursuivie jusqu'à ce que l'extrémité 6 de la bague 5 vienne en appui contre l'épaulement 11. Les portions d'extrémité 4.1 à 4.n font alors saillie à l'extérieur de la face de référence, à travers l'orifice 12.

Après que, comme cela est suggéré par les flèches f.f de la figure 4, les excédents des portions d'extrémité 4.1 à 4.n faisant saillie par rapport à ladite face de référence 9 aient été coupés le long de celle-ci (par exemple à l'aide d'une pince coupante à mors plats), lesdites portions d'extrémité 4.1 à 4.n ont toutes la longueur D désirée.

Après une telle coupe, le câble 2 est retiré de l'outil T et les portions d'extrémité 4.1 à 4.2 sont préparées (dénudage) en vue de leur connexion ultérieure.

## Revendications

1. Outil destiné à aider à couper à longueur des conducteurs d'un câble électrique (2) comportant une pluralité de tels conducteurs enveloppés dans une gaine isolante (3), au moins une extrémité (1) dudit câble (2) étant préparée de façon que les portions d'extrémité (4.1 à 4.n) desdits conducteurs font saillie par rapport à l'extrémité correspondante (6) de ladite gaine isolante (3), ledit outil permettant d'ajuster, à une longueur précise prédéterminée (D), lesdites portions d'extrémité saillantes (4.1 à 4.n) desdits conducteurs,
**caractérisé en ce que** :
- il comporte un corps (8) présentant une face de référence (9) et un canal (10) orthogonal à ladite face de référence (9) ;
- ledit canal (10) comporte une première partie (10.1) de plus grande section et une seconde partie (10.2) de plus petite section, séparées par un épaulement (11) ;
- ladite première partie (10.1) du canal (10) est apte à recevoir à frottement doux ledit câble électrique (2) de façon que ladite extrémité (6) de la gaine isolante (3) vienne en butée contre ledit épaulement (11) ;
- ladite seconde partie (10.2) du canal (10) est apte à recevoir à frottement doux l'ensemble desdites portions d'extrémité saillantes (4.1 à 4.n) desdits conducteurs et, du côté opposé audit épaulement (11), débouche dans ladite face de référence (en 12) ;
- la distance (D) séparant ledit épaulement de ladite face de référence est égale à ladite longueur précise prédéterminée.

2. Outil selon la revendication 1,
**caractérisé en ce que** ledit épaulement (11) est conformé en entonnoir facilitant le passage de l'ensemble desdites portions d'extrémité saillantes (4.1 à 4.n) desdits conducteurs, de ladite première partie (10.1) à ladite seconde partie (10.2) dudit canal (10).

3. Outil selon l'une des revendications 1 ou 2, pour un câble électrique dont ladite extrémité de la gaine isolante (3) est arrêtée par une bague (5), les portions d'extrémité (4.1 à 4.n) desdits conducteurs faisant saillie par rapport à ladite bague (5),
**caractérisé en ce que** ladite première partie (10.1) du canal (10) est apte à recevoir à frottement doux ledit câble électrique (2) équipé de ladite bague (5) de façon que ladite bague vienne en butée contre ledit épaulement (11).

4. Outil selon l'une des revendications 1 à 3, pour un câble comportant une gaine métallique de blindage (7) entre ladite gaine isolante (3) et lesdits conducteurs,
**caractérisé en ce que** ladite première partie de canal (10.1) est apte à recevoir à frottement doux ledit câble électrique (2) avec ladite gaine métallique de blindage (7) retroussée extérieurement sur ladite gaine isolante (3).

## Claims

1. A tool intended for assisting in cutting to length conductors of an electrical cable (2) comprising a plurality of such conductors encased in an insulating sheath (3), at least one end (1) of said cable (2) being prepared such that the end portions (4.1 to 4.n) of said conductors project from the corresponding end (6) of said insulating sheath (3), said tool making it possible to adjust, to a predetermined precise length (D), said projecting end portions (4.1 to 4.n) of said conductors, **characterized in that**:
- it comprises a body (8) having a reference face (9) and a channel (10) which is orthogonal to said reference face (9);
- said channel (10) comprises a first part (10.1) of larger cross section and a second part (10.2) of smaller cross section, which are separated by a shoulder (11);
- said first part (10.1) of the channel (10) is able to accommodate with slight friction said electrical cable (2) such that said end (6) of the insulating sheath (3) comes into butting contact with said shoulder (11);
- said second part (10.2) of the channel (10) is able to accommodate with slight friction the whole of said projecting end portions (4.1 to 4.n) of said conductors and, on the opposite side to said shoulder (11), opens into said reference face (at 12);
- the distance (D) separating said shoulder from said reference face is equal to said predetermined precise length.

2. The tool as claimed in claim 1, **characterized in that** said shoulder (11) is shaped as a funnel which facilitates the passage of the whole of said projecting end portions (4.1 to 4.n) of said conductors from said first part (10.1) to said second part (10.2) of said channel (10).

3. The tool as claimed in either one of claims 1 or 2 for an electrical cable whereof said end of the insulating sheath (3) is retained by a collar (5), the end portions (4.1 to 4.n) of said conductors projecting from said collar (5), **characterized in that** said first part (10.1) of the channel (10) is able to accommodate with slight friction said electrical cable (2) equipped with said collar (5) such that said collar comes into butting contact with said shoulder (11).

4. The tool as claimed in one of claims 1 to 3 for a cable comprising a metal shielding sheath (7) between said insulating sheath (3) and said conductors, **characterized in that** said first channel part (10.1) is able to accommodate with slight friction said electrical cable (2) together with said metal shielding sheath (7), which is turned back externally over said insulating sheath (3).

## Patentansprüche

1. Hilfswerkzeug zum Ablängen von Leitern eines elektrischen Kabels (2), das mehrere solcher Leiter umfasst, die von einer Isolatorhülle (3) umgeben sind, wobei mindestens ein Ende (1) des Kabels (2) so vorbereitet ist, dass die Endabschnitte (4.1 bis 4.n) der Leiter in Bezug auf das entsprechende Ende (6) der Isolatorhülle (3) vorragen, wobei mit dem Werkzeug die vorragenden Endabschnitte (4.1 bis 4.n) der Leiter auf eine genaue, vorausbestimmte Länge (D) angepasst werden können, **dadurch gekennzeichnet, dass**:
- es ein Gehäuse (8) umfasst, das eine Referenzfläche (9) und einen Kanal (10) aufweist, der senkrecht zur Referenzfläche (9) verläuft;
- der Kanal (10) einen ersten Teil (10.1) mit einem größeren Querschnitt und einen zweiten Teil (10.2) mit einem kleineren Querschnitt umfasst, die durch einen Absatz (11) getrennt sind;
- der erste Teil (10.1) des Kanals (10) imstande ist, bei leichter Reibung das elektrische Kabel (2) aufzunehmen, sodass das Ende (6) der Isolatorhülle (3) an den Absatz (11) anschlägt;
- der zweite Teil (10.2) des Kanals (10) imstande ist, bei leichter Reibung die Gesamtheit der vorragenden Endabschnitte (4.1 bis 4.n) der Leiter aufzunehmen, die auf der gegenüberliegenden Seite des Absatzes (11) in die Referenzfläche (in 12) münden;
- der Abstand (D), der den Absatz von der Referenzfläche trennt, gleich groß ist wie die genaue, vorausbestimmte Länge.

2. Werkzeug nach Anspruch 1, **dadurch gekennzeichnet, dass** der Absatz (11) trichterförmig angepasst ist, wodurch die Durchführung der Gesamtheit der vorragenden Endabschnitte (4.1 bis 4.n) vom ersten Teil (10.1) zum zweiten Teil (10.2) des Kanals (10) erleichtert wird.

3. Werkzeug nach einem der Ansprüche 1 oder 2, für ein elektrisches Kabel, dessen Ende der Isolatorhülle (3) von einem Ring (5) arretiert wird, wobei die Endabschnitte (4.1 bis 4.n) der Leiter in Bezug auf den Ring (5) vorragen, **dadurch gekennzeichnet, dass** der erste Teil (10.1) des Kanals (10) imstande ist, bei leichter Reibung das elektrische Kabel (2), das mit dem Ring (5) ausgestattet ist, aufzunehmen, sodass der Ring an den Absatz (11) anschlägt.

4. Werkzeug nach einem der Ansprüche 1 bis 3, für ein Kabel mit einer Metallverkleidungshülle (7) zwischen der Isolatorhülle (3) und den Leitern, **dadurch gekennzeichnet, dass** der erste Teil des Kanals (10.1) imstande ist, bei leichter Reibung das elektrische Kabel (2) mit der Metallverkleidungshülle (7) aufzunehmen, die außen auf die Isolatorhülle (3) aufgestülpt ist.
